# EUROPEAN PATENT SPECIFICATION

(11) **EP 4 048 048 B1**
(45) Date of publication and mention of the grant of the patent: **22.05.2024**
(21) Application number: 20835916.6
(22) Date of filing: 21.10.2020
(51) Int. Cl.: A01B 59/041, A01B 59/042, A01B 61/02, A01B 69/08, A01B 59/043, A01B 19/02

(54) **AGRICULTURAL IMPLEMENT AND METHOD OF OPERATING THE AGRICULTURAL IMPLEMENT**
LANDWIRTSCHAFTLICHES ARBEITSGERÄT UND VERFAHREN ZUM BETRIEB EINES LANDWIRTSCHAFTLICHEN ARBEITSGERÄTES
OUTIL AGRICOLE ET PROCÉDÉ DE FONCTIONNEMENT DE L'OUTIL AGRICOLE

(30) Priority: 22.10.2019 SE 1951196
(43) Date of publication of application: 31.08.2022
(73) Proprietor: Väderstad Holding AB, 590 21 Väderstad (SE)
(72) Inventor: LENNARTSSON, Edvin, 617 90 Skärblacka (SE); LANDERS, Mattias, 573 99 Tranås (SE); ANDERSSON, Leif, 382 94 Nybro (SE)
(74) Representative: AWA Sweden AB
(86) International application number: PCT/SE2020/051020
(87) International publication number: WO 2021/080495

(56) References cited:
- WO-A1-99/16295
- DE-A1-102012 108 904
- FR-A1- 2 651 637
- GB-A- 2 344 044
- US-A- 2 765 723

## Description

### Technical Field

This document discloses an agricultural implement for tillage, and a method of operating an agricultural implement for tillage.

More particularly, the document discloses a fully or partly carried agricultural implement with a coupling which makes it easier to operate the agricultural implement and makes it less sensitive to interference.

### Background

It is known that tractors that are used in agriculture are often provided with a so-called "three-point linkage" or "implement hoist" which is used for coupling a fully or partly carried agricultural implement to the tractor. Such agricultural implements can be of a soil-working type, for example ploughs, harrows, cultivators and seed drills.

The implement hoist comprises a pair of towing arms, and a top link, which can be arranged as a substantially vertical isosceles triangle with a horizontal base, of which the towing arms form the two lower corners of the triangle and the top link forms an upper corner of the triangle.

A fully carried implement is entirely suspended on the implement hoist, and can be raised or lowered by raising or lowering the towing arms. The angle of the implement to a horizontal plane can be controlled by adjusting the position of the top link.

A partly carried implement can have one or more support wheels or packer rollers in addition to the description above with respect to a fully carried implement. Alternatively, a partly carried implement can be coupled to the towing arms only, therefore not necessarily to the top link, and can have one or more support wheels or packer rollers.

A common feature of carried implements is that they are rigidly connected to the tractor, viewed in the horizontal plane. Therefore, carried implements cannot be pivoted in the horizontal plane in relation to the tractor, for example when the tractor is turning, more than to the extent possible as a result of play, for example, in the implement hoist and/or in the coupling to the agricultural implement.

Another challenge for carried implements is that if such an implement starts to pull obliquely, the entire unit, including the tractor, can come off track. This can create problems when GPS control of the tractor is to be applied.

A further challenge for carried implements is that they are sensitive to obstacles, for example stones, which they cannot give way for by turning in relation to the tractor. Therefore, there is often a need for carried implements to be dimensioned to withstand particularly great strains.

It is known to provide agricultural implements coupled to the towing arms with hydraulic arrangements for controlling the angle of the agricultural implement in relation to the tractor, viewed in the horizontal plane. One such arrangement is shown in US4930581.

Installation of hydraulic arrangements does, however, substantially increase the cost, which is partly due to the expensive components that need to be installed, and is partly due to the fact that a control and adjusting arrangement must be provided.

A fully mechanical solution is known through SE449416B. This arrangement functions well, but it is complicated, since it comprises a plurality of moving parts and joints.

Further fully mechanical solutions are known through US2765723A, DE102012108904A1, FR2651637A1, GB2344044A and WO99/16295A1.

However, it is desirable to be able to provide an agricultural implement which can attain the advantages of carried implements, but where the disadvantages described above are fully or partly eliminated.

### Summary

One object is thus to provide an improved agricultural implement. One specific object is to provide an agricultural implement which fully or partly eliminates the disadvantages described above of fully or partly carried agricultural implements.

The invention is defined by the attached independent patent claims, wherein embodiments are set forth in the attached dependent patent claims, in the description that follows and in the accompanying drawings.

According to a first aspect, an agricultural implement for tillage and/or drilling, comprising a frame, a coupling, which is connected to the frame, for carried mounting to at least towing arms of an implement hoist of the traction vehicle, and a plurality of ground-engaging tools, which are connected to the frame, is provided. The coupling comprises a coupling bar which has laterally separated coupling portions for engagement with the towing arms. The coupling comprises a bar cradle that is connected to the frame, which has a bar space, in which the coupling bar is movably receivable, so that the bar, viewed in a horizontal plane, can be tilted in the bar space, a pair of laterally separated guiding grooves, and a pair of laterally separated groove followers, which are arranged to each run in said respective guiding grooves. The guiding grooves are formed in one of the bar cradle and the coupling bar. The guiding grooves extend substantially along a direction of travel of the agricultural implement. The groove followers are formed in the other one of the bar cradle and the coupling bar, and wherein the horizontal movement of the bar in the bar cradle being limited by interaction between said guiding grooves and said groove followers. The coupling bar is pivotable in relation to the coupling cradle about a first vertical pivot axis defined by the one groove follower and the one guiding groove during horizontal pivoting in a first direction and wherein the coupling bar is pivotable in relation to the coupling cradle about a second vertical pivot axis defined by the other groove follower and the other guiding groove during horizontal pivoting in a second direction, which is opposite the first direction.

An implement hoist of a traction vehicle is a standardized device that is known per se for coupling of fully or partly carried implements to the traction vehicle. Furthermore, it is known that an implement hoist comprises a pair of towing arms and a top link.

"Ground-engaging tools" means tools which may be used on an agricultural implement for cultivating the ground and/or for placing material, such as seed, fertilizer or pesticides, in the ground. Non-limiting examples of ground-engaging tools can be levelling tools, harrow tines, cultivator tines, harrow discs, post-harrows, separating discs or packer rollers, openers for seed, fertilizer or pesticides, row units (which can comprise seed furrow-openers, furrow-openers/seed disc, seed furrow-sealers, depth regulators and/or press wheels) and flattening implements, for example packer rollers, packer roller wheels and the like.

"Laterally" means a horizontal direction which is perpendicular to a direction of travel of the agricultural implement.

The coupling portions can be pins. For example, the coupling portions can be pins protruding from the side ends of the bar. The pins can have a circular cross section and can be substantially cylindrical in shape. The pins can have a safety device in order to prevent them from becoming detached from the towing arms. One such locking device can comprise diametrical holes through the axial outer portion of the pins, in which a locking pin can be inserted.

The guiding grooves can be slots formed for example in the structure limiting the space defined by the bar cradle.

The groove followers can be pins protruding from for example the coupling bar and engaging with the guiding grooves in such a way that their movement is limited by the extension of the guiding grooves.

By means of the bar being able to be tilted in the bar cradle, a swinging motion is facilitated, and it is possible for the agricultural implement to be tilted slightly in relation to the traction vehicle, for example when colliding with obstacles or when the ground is slanting laterally.

By means of the guiding grooves and the groove followers being located at a distance from each other, as viewed laterally, the attack point of the traction force will be moved laterally when the tractor is turning in relation to the agricultural implement, so that the force on the coupling is redistributed and thus contributes to straightening the agricultural implement.

The bar cradle can comprise an upper limiting part and a lower limiting part.

The limiting parts can be designed as plates arranged mutually parallel to and at a vertical distance from each other.

The plates can be joined together by, for example, front and rear walls which can extend between the plates and in substantially vertical planes.

The guiding grooves can be formed in at least one of said upper limiting part and said lower limiting part.

In each plate a right guiding groove and a left guiding groove can be formed. Preferably, the guiding grooves of the upper and lower plates are aligned with each other, so that one and the same vertically extending pin arranged in the bar can engage with the guiding groove of both the upper and lower plates. The guiding grooves can be specifically formed by slots.

The guiding grooves can extend substantially along a direction of travel of the agricultural implement and at a distance from an agricultural implement centre line parallel to the direction of travel.

The guiding grooves can have an edge, extending along the direction of travel, which is bent inward to an agricultural implement centre line parallel to the direction of travel.

The groove followers can comprise a respective pin, protruding from the coupling bar and into respective guiding grooves.

The coupling bar can have a height which is less than a height of the bar space, so that the bar is pivotable in relation to the bar cradle in a vertical plane.

For example, the height of the bar space can be sufficiently greater than the height of the bar in order to allow tilting amounting to 1-5 degrees, preferably 2-3 degrees.

The coupling can comprise a deflection limiter, for limiting the tilting of the coupling bar in the bar cradle.

The deflection limiter can comprise a recess in the bar cradle and a limiting pin which is insertable into the recess.

The bar cradle can have a plurality of recesses in order to enable limits to different degrees of tilting, for example 0 degrees, 4 degrees and 17 degrees.

The coupling can have a third coupling portion, for coupling to a top link of the agricultural hoist, which comprises a coupling pin and a coupling recess, wherein the recess is elongate in order to allow the coupling pin to be displaced or tilted when it is received in the recess.

According to a second aspect a method of operating an agricultural implement for tillage and/or drilling is provided. In the method, the agricultural implement is coupled to a traction vehicle using at least two towing arms of an implement hoist arranged on the traction vehicle. The method comprises when driving the agricultural implement straight ahead, transferring traction force from a coupling bar to a coupling cradle using a pair of laterally separated groove followers positioned at a distance from an agricultural implement centre line parallel to the direction of travel and engaging with the respective traction contact surfaces arranged in the respective, laterally separated, guiding grooves extending substantially along a direction of travel of the agricultural implement, and when turning the agricultural implement, transferring traction force from the coupling bar to the coupling cradle using only one of the groove followers.

The method can comprise allowing one of the groove followers to be displaced longitudinally, out of contact with a traction contact surface associated with the groove follower.

The traction force can be transferred using the groove follower located on one side of the centre line which is opposite a turning direction.

The coupling bar can be pivoted in relation to the coupling cradle about a first vertical pivot axis defined by the one groove follower and the one traction contact surface when the coupling bar is pivoted in a first direction in relation to the coupling cradle and wherein the coupling bar is pivoted in relation to the coupling cradle about a second vertical pivot axis defined by the other groove follower and the other traction contact surface when the coupling bar is pivoted in a second direction in relation to the coupling cradle, which second direction is opposite the first direction.

### Brief description of the drawings

Fig. 1 schematically shows a unit comprising a traction vehicle and an agricultural implement.
Fig. 2a schematically shows a perspective view of an agricultural implement.
Fig. 2b schematically shows a perspective view of an enlargement of a portion comprising a towing device of the agricultural implement.
Fig. 2c schematically shows a perspective view of the towing device.
Figs 3a-3c schematically show a plan view from above of the towing device.
Fig. 4 schematically shows a plan view from the front of the towing device.

### Detailed description

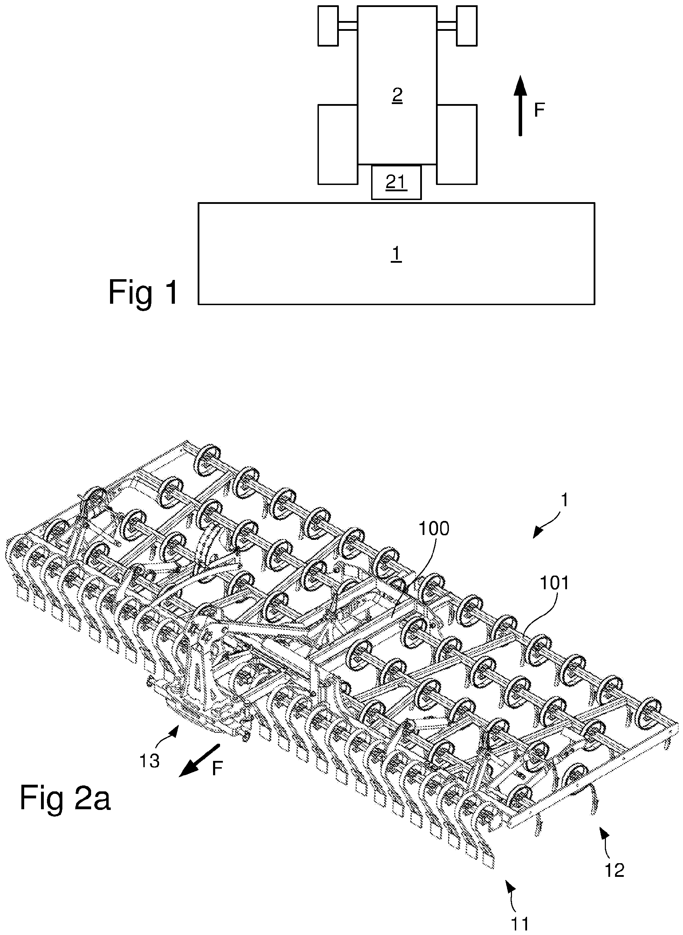

Fig. 1 shows a traction vehicle 2, for example a tractor, which has a coupling device 21 for coupling agricultural implements in the form of a so-called "implement hoist" or "three-point hoist", to which an at least partly carried agricultural implement 1 is coupled.

Fig. 2a shows an agricultural implement 1 which is fully carried, i.e. which lacks such support wheels or other support devices that are used during driving on the ground to be tilled by the agricultural implement 1.

This fully carried agricultural implement is described for illustrative purposes. It will be appreciated that the concept shown herein can also be used for partly carried agricultural implements, i.e. agricultural implements which have one or more support wheels, compacting rollers or packer rollers.

The agricultural implement 1 shown in Fig. 2a has a frame 100, 101, which comprises a longitudinal main frame 100 and a plurality of transverse frame portions 101, on which tools in the form of levelling tools 11 and harrow tines 12 are carried.

It will be appreciated that the concept shown herein can also be used for agricultural implements having other types of ground-engaging tools, for example ploughshares, harrow discs, seed discs, furrow openers for seed, harrow tines, compacting rollers, packer rollers or the like.

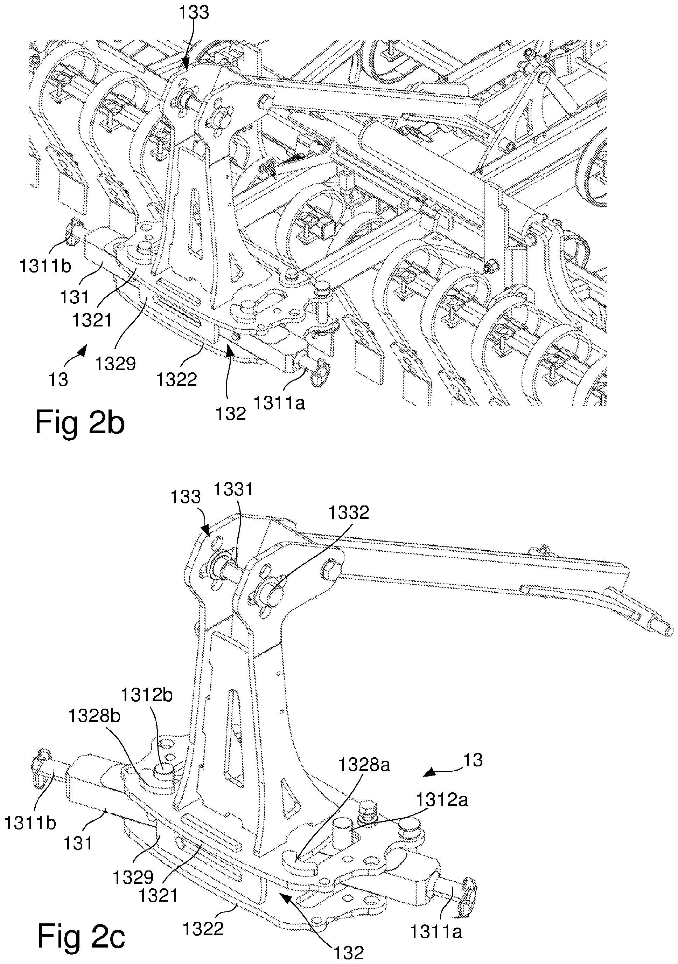

With reference to Figs 2b-2c the agricultural implement further has a coupling 13, which is formed for being coupled to an implement hoist, and for this purpose, it has three attachment points 1311a, 1311b, 133, arranged as the corners of an isosceles triangle with the base facing downward.

The coupling 13 comprises a coupling bar 131, extending substantially perpendicular to a direction of travel F for the agricultural implement 1. The coupling bar 131 at its lateral end portions has attachment portions 1311a, 1311b, which are formed to fit in recesses on the towing arms of the traction vehicle.

The coupling bar can have a bar body having a pair of opposite upward and downward facing contact surfaces. The contact surfaces can be plane. In the example shown, the bar body has a substantially square cross section with substantially plane contact surfaces and front and rear surfaces respectively.

The attachment portions 1311a, 1311b can have the form of substantially perpendicular cylinders extending substantially horizontally outward to the side from each end portion of the coupling bar 131. The attachment portions 1311a, 1311b can be provided with a safety device for preventing the attachment portions from becoming detached from the towing arms. Non-limiting examples of the safety device can be provided in the form of a diametrically transverse hole in which locking pins 134a, 134b are arranged.

The coupling bar 131 is received in a bar cradle 132, formed by upper and lower material portions 1321, 1322, here in the form of discs, which can be held together by one or more wall portions 1329, which can also be formed by discs. The discs can be made from sheet metal, for example steel plate, with a thickness of approximately 1-3 cm.

The bar cradle 132 can have upper and lower contact surfaces respectively, which are adapted for contact against the upper and lower contact surfaces of the coupling bar.

It is possible to arrange a bearing or any other wear protection between the contact surfaces of the coupling bar 131 and the coupling cradle 132, for example in order to facilitate relative movement and/or in order to avoid undesired wear.

As will be seen in Fig. 2c, the coupling bar 131 is horizontally pivotably received in the cradle 132.

The upper coupling 133 can comprise a peg 1331 which is received in a peg hole 1332. The peg hole 1332 can be elongate and form a slot extending horizontally in parallel with the centre line C.

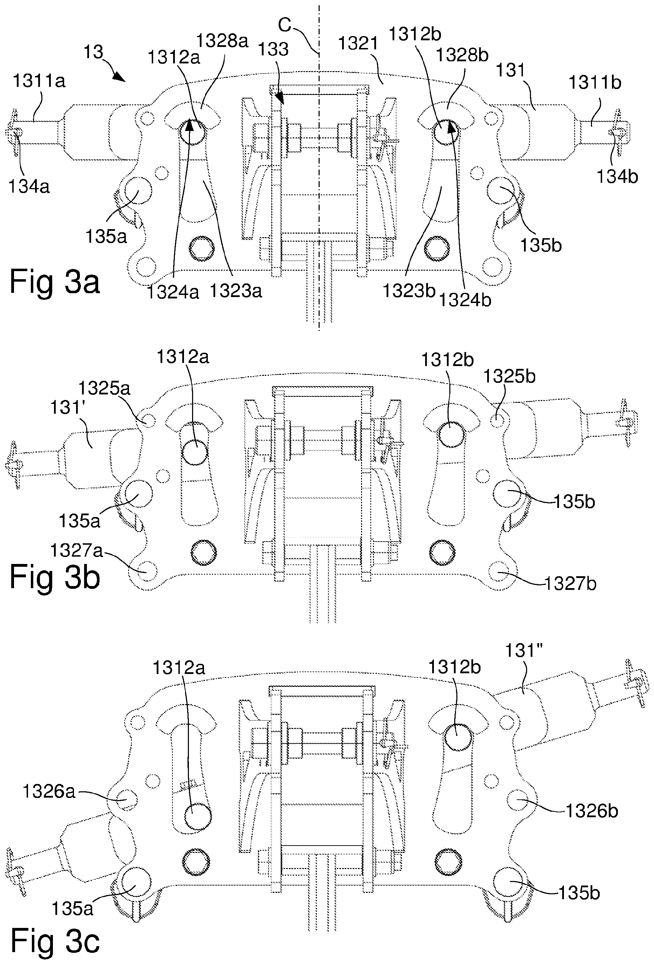

This pivotability will be explained further with reference to Figs 3a-3c.

Figs 3a-3c show the coupling viewed in a plan view from above. Here the coupling bar 131 extends horizontally through the bar cradle 132, which is formed by the upper and lower material portions 1321, 1322. A centre line C, which is parallel to the direction of travel F and which runs horizontally through the agricultural implement at its centre, viewed across the direction of travel, is indicated by a dotted line.

In at least one of the material portions 1321, 1322, preferably in both, a pair of slots 1323a, 1323b are formed. Each of the slots 1323a, 1323b extends substantially parallel to the centre line and at a distance laterally from this. The distance between the slot and the centre line can be less than a distance from the centre line to the laterally outermost point of the coupling bar, preferably approximately 20-80 %, or approximately 30-60 %, of said distance from the centre line to the laterally outermost point of the coupling bar. In practice, the distance can be approximately 20-40 cm.

Alternatively, the distance between the slot and the centre line can be greater than said distance, wherein the attachment portions can be inside the laterally outermost point of the coupling bar, so that the pins can be outside of the attachment portions.

In each of the slots, a pin 1312a, 1312b, fixedly connected to the coupling bar 131 and protruding from an upward or downward facing surface of the coupling bar 131 and into the respective slot 1323a, 1323b, runs so that the movement of the bar 131 in the bar cradle 132 is limited by how far the respective pin 1312a, 1312b can move in the slot 1323a, 1323b associated with the pin.

Thus, the slots have a width which is sufficiently wide so that the pins can move without hindrance along the respective slots.

In addition, the slots can have a diminishing width in the direction of travel. Specifically, an edge of the slots facing inward to the centre line can be pivoted. For example, the edge can be pivoted so that the distance between the edge and the centre line increases in a forward direction.

Front and rear edges of the slots can be rounded.

The front edges of the slots can be reinforced, for example with a material thickening 1328a, 1328b so that they have an even, inwardly concave contact surface 1324a, 1324b for contact against each pin 1312a, 1312b respectively.

In the embodiment shown the coupling bar 131 has pins extending both upward and downward and both the upper and lower material portions 1321, 1322 have slots, which can, but do not have to, be aligned with each other. In the same way, upward and downward extending pins can, but do not have to, be aligned with each other.

By means of this arrangement, the coupling bar 131 can move freely in the bar cradle 132, only limited by the engagement of the pins with the grooves.

The material portions 1321, 1322 can have adjustable deflection limiters, which can be used in order to further limit the horizontal movement of the coupling bar 131 in the bar cradle 132.

In the example shown, the deflection limiters comprise a pair of front peg holes 1325a, 1325b, a pair of middle peg holes 1326a, 1326b and a pair of rear peg holes 1327a, 1327b.

Fig. 3a shows the coupling bar 131 and the bar cradle 132 in a straight towing position, which can be expected to exist when the agricultural implement is towed straight ahead by a traction vehicle. In this towing position, the traction force is distributed relatively evenly between the right and the left pin 1312a, 1312b to the respective contact surface 1324a, 1324b. A resulting force can thus be considered to coincide with the centre line C.

In Fig. 3a, pegs 135a, 135b have also been arranged in the middle peg holes 1326a, 1326b, in order to limit the possible horizontal deflection to approximately +/- 4 degrees.

Fig. 3b shows the coupling bar 131' and the bar cradle 132 in a position where the traction vehicle is turning to the left. In this position, the bar 131' slightly pivots to the left in order to follow the traction vehicle, wherein the left pin 1312a loses contact with the contact surface 1324a of the left slot 1323a. Accordingly, the entire traction force is distributed on the right pin 1312b and the contact surface 1324b of its associated slot 1323b.

The resulting force will thus originate from the contact surface between the right pin 1312b and its contact surface 1324b, and thus be approximately twice as large as in Fig. 3a and give rise to a torque that will act in order to straighten the agricultural implement 1 in relation to the traction vehicle 2.

Fig. 3c shows the same situation as in Fig. 3b, but where the pegs 135a, 135b are instead placed in the rear peg holes 1327a, 1327b, in order to allow the coupling bar 131" to make a larger pivotal movement in relation to the bar cradle 132. In the example shown in Fig. 3c, a pivoting of approximately +/- 17 degrees is allowed.

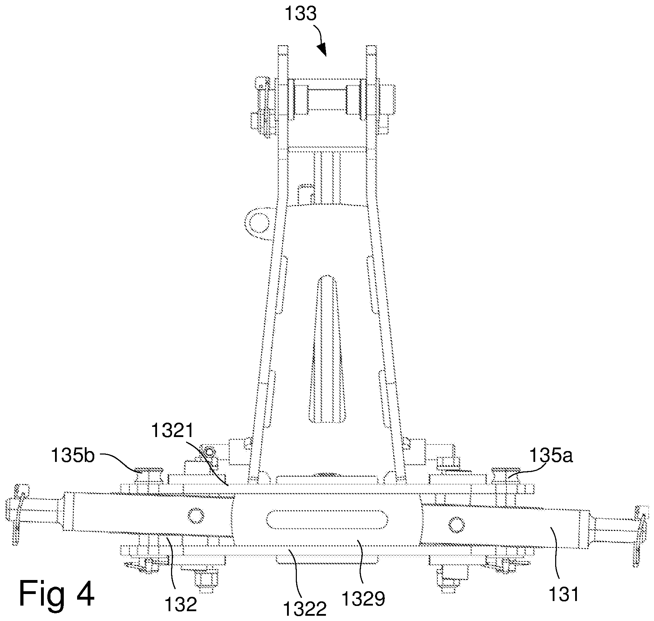

Fig. 4 shows how the bar cradle 132 can have a height which is greater than the height of the bar 131, so that the bar is allowed to tilt slightly in relation to the bar cradle 132. By those means, the bar is allowed to take up a certain pivoting of the agricultural implement 1 about the centre axis in relation to the traction vehicle 2. In the example shown, approximately +/- 2 degrees pivoting about a horizontal axis parallel to the centre line C is allowed.

The operation of the coupling 13 will be described below.

Before connecting the coupling 13 to the implement hoist 21, the coupling can be set to the desired horizontal deflection by arranging pegs 135a, 135b in the peg holes 1325a, 1325b, 1326a, 1326b, 1327a, 1327b.

The coupling device is connected to the implement hoist 21 of the traction vehicle 2 in a manner known per se. The two attachment portions 1311a, 1311b are connected using the respective towing arm of the implement hoist 21 of the traction vehicle, wherein they can be secured using the pegs 134a, 134b. Furthermore, the top link of the implement hoist is connected to the upper attachment point 133 of the coupling 13.

After that, any control connections can be established, for example for hydraulics and/or electronics.

The agricultural implement 1 is then driven in a conventional manner. When driving straight ahead, the bar will be set so that the pins 1312a, 1312b bear against the surfaces 1324a, 1324b for transferring traction force.

In the event of obstacles, for example increased resistance on the ground on either side of the agricultural implement 1, colliding with a stone or when the ground is slanting laterally, one of the pins 1312a, 1312b will leave its contact with the surface 1324a, 1324b, which allows the agricultural implement 1 to swing out in relation to the traction vehicle 2.

During such a turn, however, the entire traction force will be transferred via the one of the pins 1312a, 1312b which is still in contact with its contact surface 1324a, 1324b. In addition, the resulting force, now attacking at a distance from the centre line C, will give rise to a torque on the agricultural implement, which counteracts the turn and also acts in an upright way on the agricultural implement.

It will be appreciated that the pivoting of the coupling bar 131 in the cradle 132 is only limited by the interacting pins and slots, and not by any central pin.

It will also be appreciated that it is possible to provide a corresponding arrangement using slots that are open horizontally in a direction perpendicular to the direction of travel.

It will be appreciated that it is possible to arrange slots in the coupling bar and pins protruding inward from the inward facing walls of the cradle.

## Claims

1. Agricultural implement for tillage and/or drilling, comprising:
a frame (100, 101),
a coupling (13) connected to the frame for carried mounting to at least towing arms of an implement hoist of the traction vehicle, and
a plurality of ground-engaging tools (11, 12) which are connected to the frame,
wherein the coupling (13) comprises a coupling bar (131) which has laterally separated coupling portions (1311a, 1311b) for engagement with the towing arms,
wherein the coupling (13) comprises:
a bar cradle (132) that is connected to the frame, which has a bar space, in which the coupling bar is movably receivable, so that the bar, viewed in a horizontal plane, can be tilted in the bar space,
a pair of laterally separated guiding grooves (1323a, 1323b), and
a pair of laterally separated groove followers (1312a, 1312b), which are arranged to each run in said respective guiding grooves (1323a, 1323b),
wherein the guiding grooves (1323a, 1323b) are formed in one of the bar cradle (132) and the coupling bar (131),
wherein the guiding grooves extend substantially along a direction of travel of the agricultural implement,
wherein the groove followers (1312a, 1312b) are formed in the other one of the bar cradle and the coupling bar, and
wherein the horizontal movement of the bar (131) in the bar cradle (132) is limited by interaction between said guiding grooves and said groove followers (1312a, 1312b),
so that the coupling bar (131) is pivotable in relation to the coupling cradle (132) about a first vertical pivot axis defined by the one groove follower and the one guiding groove during horizontal pivoting in a first direction and wherein the coupling bar is pivotable in relation to the coupling cradle about a second vertical pivot axis defined by the other groove follower and the other guiding groove during horizontal pivoting in a second direction, which is opposite the first direction.

2. Agricultural implement according to Claim 1, wherein the bar cradle comprises an upper limiting part and a lower limiting part.

3. Agricultural implement according to Claim 2, wherein said guiding grooves are formed in at least one of said upper limiting part and said lower limiting part.

4. Agricultural implement according to any one of the preceding claims, wherein the guiding grooves have an edge, extending along the direction of travel, which is bent inward to an agricultural implement centre line parallel to the direction of travel.

5. Agricultural implement according to any one of the preceding claims, wherein the groove followers comprise a respective pin, protruding from the coupling bar and into respective guiding grooves.

6. Agricultural implement according to any one of the preceding claims, wherein the coupling bar has a height which is less than a height of the bar space, so that the bar is pivotable in relation to the bar cradle in a vertical plane.

7. Agricultural implement according to any one of the preceding claims, wherein the coupling comprises a deflection limiter, for limiting the tilting of the coupling bar in the bar cradle.

8. Agricultural implement according to Claim 7, wherein the deflection limiter comprises a recess in the bar cradle and a limiting pin which is insertable into the recess.

9. Agricultural implement according to any one of the preceding claims, wherein the bar cradle has a plurality of recesses in order to enable limits to different degrees of tilting, for example 0 degrees, 4 degrees and 17 degrees.

10. Agricultural implement according to any one of the preceding claims, wherein the coupling has a third coupling portion (133), for coupling to a top link of the agricultural hoist, which comprises a coupling pin (1331) and a coupling recess (1332), wherein the recess (1332) is elongate in order to allow the coupling pin (1331) to be displaced or tilted when it is received in the recess (1332).

11. Method of operating an agricultural implement for tillage and/or drilling,
wherein the agricultural implement comprises a frame (100, 101), and a plurality of ground-engaging tools (11, 12) which are connected to the frame,
wherein the agricultural implement is coupled to a traction vehicle using at least two towing arms of an implement hoist arranged on the traction vehicle,
wherein the method comprises:
when driving the agricultural implement straight ahead, transferring traction force from a coupling bar to a coupling cradle using a pair of laterally separated , groove followers positioned at a distance from an agricultural implement centre line (C) parallel to the direction of travel and engaging with the respective traction contact surfaces arranged in the respective, laterally separated, guiding grooves (1323a, 1323b) extending substantially along a direction of travel of the agricultural implement, and
when turning the agricultural implement, transferring traction force from the coupling bar to the coupling cradle using only one of the groove followers.

12. Method according to Claim 11, further comprising allowing one of the groove followers to be displaced longitudinally, out of contact with a traction contact surface associated with the groove follower.

13. Method according to either Claim 11 or 12, wherein the traction force is transferred using the groove follower located on one side of the centre line which is opposite a turning direction.

14. Method according to any one of Claims 11-13, wherein the coupling bar is pivoted in relation to the coupling cradle about a first vertical pivot axis defined by the one groove follower and the one traction contact surface when the coupling bar is pivoted in a first direction in relation to the coupling cradle and wherein the coupling bar is pivoted in relation to the coupling cradle about a second vertical pivot axis defined by the other groove follower and the other traction contact surface when the coupling bar is pivoted in a second direction in relation to the coupling cradle, which second direction is opposite the first direction.

## Patentansprüche

1. Landwirtschaftliches Gerät zum Bodenbearbeiten und/oder Säen, umfassend:
einen Rahmen (100, 101),
eine Kopplung (13), die mit dem Rahmen verbunden ist, zum getragenen Montieren an mindestens Zugarmen eines Gerätehebezeugs des Zugfahrzeugs, und
mehrere Bodeneingriffswerkzeuge (11, 12), die mit dem Rahmen verbunden sind,
wobei die Kopplung (13) eine Kopplungsstange (131) umfasst, die seitlich getrennte Kopplungsabschnitte (1311a, 1311b) für einen Eingriff mit den Zugarmen aufweist,
wobei die Kopplung (13) umfasst:
eine Stangenhalterung (132), die mit dem Rahmen verbunden ist und einen Stangenraum aufweist, in dem die Kopplungsstange beweglich aufnehmbar ist, so dass die Stange, in einer horizontalen Ebene betrachtet, in dem Stangenraum gekippt werden kann,
ein Paar seitlich getrennter Führungsnuten (1323a, 1323b), und
ein Paar seitlich getrennter Nutenfolger (1312a, 1312b), die so angeordnet sind, dass sie jeweils in den entsprechenden Führungsnuten (1323a, 1323b) laufen,
wobei die Führungsnuten (1323a, 1323b) entweder in der Stangenhalterung (132) oder in der Kopplungsstange (131) gebildet sind,
wobei sich die Führungsnuten im Wesentlichen entlang einer Fahrtrichtung des landwirtschaftlichen Gerätes erstrecken,
wobei die Nutenfolger (1312a, 1312b) in der jeweils anderen der Stangenhalterung und der Kopplungsstange gebildet sind, und
wobei die horizontale Bewegung der Stange (131) in der Stangenhalterung (132) durch Wechselwirkung zwischen den Führungsnuten und den Nutenfolgern (1312a, 1312b) begrenzt ist,
so dass die Kopplungsstange (131) in Bezug auf die Kopplungshalterung (132) um eine erste vertikale Schwenkachse schwenkbar ist, die durch den einen Nutenfolger und die eine Führungsnut während eines horizontalen Schwenkens in einer ersten Richtung definiert ist, und wobei die Kopplungsstange in Bezug auf die Kopplungshalterung um eine zweite vertikale Schwenkachse schwenkbar ist, die durch den anderen Nutenfolger und die andere Führungsnut während eines horizontalen Schwenkens in einer zweiten Richtung definiert ist, die der ersten Richtung entgegengesetzt ist.

2. Landwirtschaftliches Gerät nach Anspruch 1, wobei die Stangenhalterung ein oberes Begrenzungsteil und ein unteres Begrenzungsteil umfasst.

3. Landwirtschaftliches Gerät nach Anspruch 2, wobei die Führungsnuten in dem oberen Begrenzungsteil und/oder dem unteren Begrenzungsteil gebildet sind.

4. Landwirtschaftliches Gerät nach einem der vorhergehenden Ansprüche, wobei die Führungsnuten eine Kante aufweisen, die sich entlang der Fahrtrichtung erstreckt und nach innen zu einer Mittellinie des landwirtschaftlichen Gerätes parallel zu der Fahrtrichtung gebogen ist.

5. Landwirtschaftliches Gerät nach einem der vorhergehenden Ansprüche, wobei die Nutenfolger einen jeweiligen Stift umfassen, der von der Kopplungsstange und in die jeweiligen Führungsnuten vorsteht.

6. Landwirtschaftliches Gerät nach einem der vorhergehenden Ansprüche, wobei die Kopplungsstange eine Höhe hat, die geringer ist als eine Höhe des Stangenraums, so dass die Stange in Bezug auf die Stangenhalterung in einer vertikalen Ebene schwenkbar ist.

7. Landwirtschaftliches Gerät nach einem der vorhergehenden Ansprüche, wobei die Kopplung einen Auslenkungsbegrenzer umfasst, um das Kippen der Kopplungsstange in der Stangenhalterung zu begrenzen.

8. Landwirtschaftliches Gerät nach Anspruch 7, wobei der Auslenkungsbegrenzer eine Vertiefung in der Stangenhalterung und einen Begrenzungsstift umfasst, der in die Vertiefung einsetzbar ist.

9. Landwirtschaftliches Gerät nach einem der vorhergehenden Ansprüche, wobei die Stangenhalterung mehrere Vertiefungen aufweist, um unterschiedliche Kippgrade zu ermöglichen, zum Beispiel 0 Grad, 4 Grad und 17 Grad.

10. Landwirtschaftliches Gerät nach einem der vorhergehenden Ansprüche, wobei die Kopplung einen dritten Kopplungsabschnitt (133) zum Koppeln mit einem Oberlenker des landwirtschaftlichen Hebezeugs aufweist, der einen Kopplungsstift (1331) und eine Kopplungsvertiefung (1332) umfasst, wobei die Vertiefung (1332) länglich ist, um zu ermöglichen, dass der Kopplungsstift (1331) verschoben oder gekippt werden kann, wenn er in der Vertiefung (1332) aufgenommen ist.

11. Verfahren zum Betreiben eines landwirtschaftlichen Geräts zum Bodenbearbeiten und/oder Säen,
wobei das landwirtschaftliche Gerät einen Rahmen (100, 101) und mehrere Bodenbearbeitungswerkzeuge (11, 12) umfasst, die mit dem Rahmen verbunden sind,
wobei das landwirtschaftliche Gerät unter Verwendung von mindestens zwei Zugarmen eines Gerätehebezeugs, das auf dem Zugfahrzeug angeordnet ist, mit einem Zugfahrzeug gekoppelt ist,
wobei das Verfahren umfasst:
wenn das landwirtschaftliche Gerät geradeaus gefahren wird, Übertragen der Zugkraft von einer Kopplungsstange auf eine Kopplungshalterung unter Verwendung eines Paars seitlich getrennter Nutenfolger, die in einem Abstand von einer Mittellinie (C) des landwirtschaftlichen Geräts parallel zu der Fahrtrichtung positioniert sind und in die jeweiligen Zugkontaktflächen eingreifen, die in den jeweiligen, seitlich getrennten Führungsnuten (1323a, 1323b) angeordnet sind, die sich im Wesentlichen entlang einer Fahrtrichtung des landwirtschaftlichen Geräts erstrecken, und
wenn das landwirtschaftliche Gerät gedreht wird, Übertragen der Zugkraft von der Kopplungsstange auf die Kopplungshalterung unter Verwendung nur eines der Nutenfolger.

12. Verfahren nach Anspruch 11, ferner umfassend Ermöglichen, dass einer der Nutenfolger in Längsrichtung verschoben wird, so dass er nicht mit einer Zugkontaktfläche, die dem Nutenfolger zugeordnet ist, in Kontakt kommt.

13. Verfahren nach entweder Anspruch 11 oder 12, wobei die Zugkraft unter Verwendung des Nutenfolgers übertragen wird, der sich auf einer Seite der Mittellinie befindet, die einer Drehrichtung entgegengesetzt ist.

14. Verfahren nach einem der Ansprüche 11-13, wobei die Kopplungsstange in Bezug auf die Kopplungshalterung um eine erste vertikale Schwenkachse geschwenkt wird, die durch den einen Nutenfolger und die eine Zugkontaktfläche definiert ist, wenn die Kopplungsstange in einer ersten Richtung in Bezug auf die Kopplungshalterung geschwenkt wird, und wobei die Kopplungsstange in Bezug auf die Kopplungshalterung um eine zweite vertikale Schwenkachse geschwenkt wird, die durch den anderen Nutenfolger und die andere Zugkontaktfläche definiert ist, wenn die Kopplungsstange in einer zweiten Richtung in Bezug auf die Kopplungshalterung geschwenkt wird, wobei die zweite Richtung entgegengesetzt zu der ersten Richtung ist.

## Revendications

1. Outil agricole destiné au labour et/ou au forage, comprenant :
un châssis (100,101),
un accouplement (13) connecté au châssis pour un montage supporté sur au moins des bras de remorquage d'un treuil d'outil du véhicule de traction, et
une pluralité d'outils s'engageant dans le sol (11,12) et qui sont connectés au châssis,
l'accouplement (13) comprenant une barre (131) qui comporte des sections d'accouplement séparées latéralement (1311a, 1311b) destinées à s'engager dans les bras de remorquage,
l'accouplement (13) comprenant :
un berceau de barre (132) qui est connecté au châssis et qui comporte un espace de barre dans lequel la barre d'accouplement est recevable de manière mobile, de sorte que la barre, vue dans un plan horizontal, peut être inclinée dans l'espace de barre,
une paire de gorges de guidage séparées latéralement (1323a, 1323b), et
une paire de suiveurs de gorge séparés latéralement (1312a, 1312b) qui sont disposés de manière à circuler chacun dans lesdites gorges de guidage respectives (1323a, 1323b),
les gorges de guidage (1323a, 1323b) étant formées dans un élément parmi le berceau de barre (132) et la barre d'accouplement (131),
les gorges de guidage s'étendant sensiblement dans un sens de déplacement de l'outil agricole,
les suiveurs de gorge (1312a, 1312b) étant formés dans l'autre élément parmi le berceau de barre et la barre d'accouplement, et
le mouvement horizontal de la barre (131) dans le berceau de barre (132) étant limité par l'interaction entre lesdites gorges de guidage et lesdits suiveurs de gorge (1312a, 1312b),
de sorte que la barre d'accouplement (131) est pivotable par rapport au berceau d'accouplement (132) autour d'un premier axe de pivotement vertical défini par l'un des suiveurs de gorge et l'une des gorges de guidage pendant le pivotement horizontal dans un premier sens et que la barre d'accouplement est pivotable par rapport au berceau d'accouplement autour d'un second axe de pivotement vertical défini par l'autre suiveur de gorge et l'autre gorge de guidage pendant le pivotement horizontal dans un second sens qui est opposé au premier sens.

2. Outil agricole selon la revendication 1, dans lequel le berceau de barre comprend une pièce de limitation supérieure et une pièce de limitation inférieure.

3. Outil agricole selon la revendication 2, dans lequel lesdites gorges de guidage sont formées dans au moins une pièce parmi ladite pièce de limitation supérieure et ladite pièce de limitation inférieure.

4. Outil agricole selon l'une quelconque des revendications précédentes, dans lequel les gorges de guidage ont des bords s'étendant dans le sens de déplacement qui est courbé vers l'intérieur vers une ligne centrale d'outil agricole parallèle au sens de déplacement.

5. Outil agricole selon l'une quelconque des revendications précédentes, dans lequel les suiveurs de gorges comprennent une broche respective saillant de la barre d'accouplement et dans les gorges de guidage.

6. Outil agricole selon l'une quelconque des revendications précédentes, dans lequel la barre d'accouplement a une hauteur qui est inférieure à une hauteur de l'espace de barre, de sorte que la barre est pivotable par rapport au berceau de barre dans un plan vertical.

7. Outil agricole selon l'une quelconque des revendications précédentes, dans lequel l'accouplement comprend un limiteur de déviation pour limiter l'inclinaison de la barre d'accouplement dans le berceau de barre.

8. Outil agricole selon la revendication 7, dans lequel le limiteur de déviation comprend un retrait dans le berceau de barre et une broche de limitation qui est insérable dans le retrait.

9. Outil agricole selon l'une quelconque des revendications précédentes, dans lequel le berceau de barre comporte une pluralité de retraits afin de mettre des limites à différents degrés d'inclinaison, par exemple 0 degré, 4 degrés et 17 degrés.

10. Outil agricole selon l'une quelconque des revendications précédentes, dans lequel l'accouplement comporte une troisième section d'accouplement (133) destinée à s'accoupler à un lien supérieur du treuil agricole et qui comprend une broche d'accouplement (1331) et un retrait d'accouplement (1332), le retrait (1332) étant allongé afin de permettre à la broche d'accouplement (1331) d'être déplacée ou inclinée lorsqu'elle est reçue dans le retrait (1332).

11. Procédé d'utilisation d'un outil agricole destiné au labour et/ou au forage, dans lequel
l'outil agricole comprend un châssis (100, 101), et une pluralité d'outils s'engageant dans le sol (11, 12) et qui sont connectés au châssis,
l'outil agricole étant accouplé à un véhicule de traction utilisant au moins deux bras de remorquage d'un treuil d'outil disposé sur le véhicule de traction,
ce procédé comprenant :
lors de l'entraînement de l'outil agricole tout droit vers l'avant, le transfert de force de traction depuis une barre d'accouplement vers un berceau d'accouplement en utilisant une paire de suiveurs de gorge séparés positionnés à distance d'une ligne centrale de l'outil agricole (C) parallèle au sens de déplacement et s'engageant dans les surfaces de contact de traction respectives disposées dans les gorges de guidage (1323a, 1323b) séparées latéralement s'étendant sensiblement dans un sens de déplacement de l'outil agricole, et
lors de la rotation de l'outil agricole, le transfert de force de traction de la barre d'accouplement vers le berceau d'accouplement en utilisant un seul des suiveurs de gorge.

12. Procédé selon la revendication 11, comprenant en outre le fait de permettre à l'un des suiveurs de gorges d'être déplacé longitudinalement sans contact avec une surface de contact de traction associée au suiveur de gorge.

13. Procédé selon la revendication 11 ou 12, dans lequel la force de traction est transférée en utilisant le suiveur de gorge situé sur un côté de la ligne centrale qui est opposé à un sens de rotation.

14. Procédé selon l'une quelconque des revendications 11 à 13, dans lequel la barre d'accouplement est pivotée par rapport au berceau d'accouplement autour d'un premier axe de pivotement vertical défini par l'un des suiveurs de gorge et l'une des surfaces de contact de traction lorsque la barre d'accouplement est pivotée dans un premier sens par rapport au berceau d'accouplement et la barre d'accouplement est pivotée par rapport au berceau d'accouplement autour d'un second axe de pivotement vertical défini par l'autre des suiveurs de gorge et l'autre des surfaces de contact de traction lorsque la barre d'accouplement est pivotée dans un second sens par rapport au berceau d'accouplement, lequel second sens est opposé au premier sens.
